# EUROPÄISCHE PATENTSCHRIFT

(11) **EP 3 717 099 B1**
(45) Veröffentlichungstag und Bekanntmachung des Hinweises auf die Patenterteilung: **08.10.2025**
(21) Anmeldenummer: 18811250.2
(22) Anmeldetag: 28.11.2018
(51) Int. Cl.: B01D 35/153, B01D 35/16, B01D 35/30, B01D 29/21

(54) **FILTERELEMENT EINES FILTERS FÜR FLÜSSIGKEIT, FILTER UND FILTERGEHÄUSE**
FILTER ELEMENT OF A FILTER FOR LIQUID, FILTER AND FILTER HOUSING
ÉLÉMENT FILTRANT D'UN FILTRE POUR LIQUIDE, FILTRE ET BOÎTIER DE FILTRE

(30) Priorität: 30.11.2017 DE 102017011080
(43) Veröffentlichungstag der Anmeldung: 07.10.2020
(73) Patentinhaber: MANN+HUMMEL GmbH, 71636 Ludwigsburg (DE)
(72) Erfinder: JAINEK, Herbert, 74074 Heilbronn (DE)
(74) Vertreter: Mann + Hummel Intellectual Property
(86) Internationale Anmeldenummer: PCT/EP2018/082836
(87) Internationale Veröffentlichungsnummer: WO 2019/106008

(56) Entgegenhaltungen:
- WO-A1-2011/070011
- WO-A1-2016/142389
- WO-A1-2017/050367
- DE-T2- 602006 000 380
- DE-U1- 202005 002 955
- KR-B1- 100 775 520
- US-A1- 2008 179 238

## Beschreibung

### Technisches Gebiet

Die Erfindung betrifft ein Filterelement eines Filters für Flüssigkeit, welches in einem Filtergehäuse des Filters austauschbar angeordnet ist oder werden kann, mit
- wenigstens einem Filtermedium, welches eine gedachte Achse umfangsmäßig umgibt,
- wenigstens einem Ableitungsverschlusselement, welches an einer bezüglich der Achse axialen Stirnseite des Filterelements exzentrisch angeordnet ist und mit dem eine Ableitungsöffnung eines Ableitungskanals des Filtergehäuses, welcher zur Entleerung des Filters beim Ausbau des Filterelements dient, in eingebautem Zustand des Filterelements verschlossen ist,
wobei das wenigstens eine Ableitungsverschlusselement in seiner bezüglich der Achse umfangsmäßigen Ausdehnung begrenzt ist.

Ferner betrifft die Erfindung einen Filter für Flüssigkeit, mit einem Filtergehäuse, in dem wenigstens ein Filterelement austauschbar angeordnet ist, wobei das Filtergehäuse aufweist
- wenigstens einen Einlass für zu reinigende Flüssigkeit,
- wenigstens einen Auslass für gereinigte Flüssigkeit,
- wenigstens einen Ableitungskanal für Flüssigkeit zur Entleerung des Filters beim Ausbau des wenigstens einen Filterelements,
- wenigstens eine verschließbare Einbauöffnung zum Einbau und Ausbau des wenigstens einen Filterelements,

wobei wenigstens ein Filterelement aufweist
   - wenigstens ein Filtermedium, welches eine gedachte Achse umfangsmäßig umgibt,
   - wenigstens ein Ableitungsverschlusselement, welches an einer bezüglich der Achse axialen Stirnseite des Filterelements exzentrisch angeordnet ist und mit dem eine Ableitungsöffnung des Ableitungskanals in eingebautem Zustand des Filterelements verschlossen ist,
wobei das wenigstens eine Ableitungsverschlusselement und die Ableitungsöffnung in ihren bezüglich der Achse umfangsmäßigen Ausdehnungen jeweils begrenzt sind.

### Stand der Technik

Die WO 2011/070011 A1 zeigt einen Flüssigkeitsfilter mit einem Filtergehäuse, mit einem Ringfiltereinsatz und mit einem Deckel, wobei in einem Boden des Gehäuses ein exzentrischer Ablauf zum Entleeren des Gehäuses bei Entnahme des Filtereinsatzes angeordnet ist. Der Filtereinsatz besteht aus einem von Stirnscheiben eingefassten Filterstoffkörper, wobei an der dem Boden zugewandten Stirnscheibe ein Sperrelement für den Ablauf angeordnet ist und wobei am Filtereinsatz und am Gehäuse Positioniermittel vorgesehen sind.

Der WO 2016/142389 A1 ist ein Filter mit einem Filtergehäuse zu entnehmen, mit einem das Filtergehäuse im Betrieb verschließenden, vom Filtergehäuse abnehmbaren Gehäusedeckel, mit einem Einlass für zu filternde Flüssigkeit und mit einem Auslass für gefilterte Flüssigkeit, mit einem eine Rohseite und eine Reinseite des Filters voneinander trennenden, austauschbaren Filtereinsatz und mit einem Filterumgehungsventil, das aus einem Ventilsitz und aus einem relativ dazu beweglich geführten, mit einer in Ventilschließrichtung wirkenden Kraft vorbelasteten Ventilkörper besteht.

Aus der DE 60 2006 000380 T2 ist ein Ölfilter bekannt, wobei dieser Filter einen Filtrationsraum definiert, in dem ein Filtereinsatz untergebracht ist, wobei ein Entleerungskanal vorgesehen ist, wobei dieser Entleerungskanal infolge des Abnehmens des Gehäusedeckels geöffnet wird. Der Entleerungskanal umfasst eine Platte, die von dem Filtereinsatz unabhängig und mit einem röhrenförmigen Teil versehen ist.

Die WO 2017/050367 A1 offenbart einen Filtereinsatz zur entfernbaren Anordnung in einem Filtergehäuse, umfassend ein Verschlussmittel am ersten Ende des Filtereinsatzes zum Steuern des Öffnens bzw. Schließens einer im Filtergehäuse angeordneten Drainageöffnung, wobei der Filtereinsatz ein Betätigungsmittel umfasst, das mit dem Verschlussmittel wirkverbunden ist, wobei das Betätigungsmittel in einer axialen Richtung relativ zu einer Filtermaterialkörperstützstruktur am zweiten Ende des Filtereinsatzes beweglich angeordnet ist, um eine axiale Bewegung des Verschlussmittels zu erzeugen, wenn das Betätigungsmittel betätigt wird.

Aus der DE 20 2005 002 955 U1 ist ein Filtereinsatz für einen Flüssigkeitsfilter, insbesondere Ölfilter, bekannt, mit zwei Stirnscheiben, von denen wenigstens eine eine zentrale Durchbrechung aufweist, und mit einem zwischen den Stirnscheiben angeordneten Filterstoffkörper. Der Flüssigkeitsfilter weist ein mit einem Deckel versehenes Filtergehäuse, in dem der Filtereinsatz anzuordnen ist, sowie neben einem Einlasskanal für zu reinigende und einem Auslasskanal für gereinigte Flüssigkeit einen Ableitungskanal zur Entleerung des Filters beim Wechsel des Filtereinsatzes auf. Als Verschlussglied für den Ableitungskanal ist ein sich von der diesem zugewandten Stirnseite des Filtereinsatzes axial nach außen hin erstreckender Verschlussdorn vorgesehen, der im Einbauzustand des Filtereinsatzes dichtend in einem Abschnitt des Ableitungskanals liegt und der mit dem Herausziehen des Filtereinsatzes aus dem Gehäuse unter Freigabe des Ableitungskanals aus diesem herausziehbar ist.

Die KR 100 775 520 B1 betrifft ein Ablassventil für einen Ölfilter, umfassend ein Kompressionselement, einen Ventilstift und eine Ventilfeder. Der Ventilstift hat ein unteres Ende, das von einer oberen Fläche des Kompressionselements getragen wird, und ein oberes Ende, das sich in einer Ventilaufnahme auf und ab bewegt, die integral am Boden einer unteren Platte eines Filterelements ausgebildet ist.

Der Erfindung liegt die Aufgabe zugrunde, ein Filterelement und einen Filter der eingangs genannten Art zu gestalten, bei denen ein Verschluss und eine Freigabe der Ableitungsöffnung einfacher und zuverlässiger realisierbar ist.

### Offenbarung der Erfindung

Diese Aufgabe wird erfindungsgemäß bei dem Filterelement dadurch gelöst, dass das wenigstens eine Ableitungsverschlusselement an seiner freien bezüglich der Achse axialen Stirnseite wenigstens eine wenigstens teilweise bezüglich der Achse axial gerichtete Verschlussfläche aufweist, die an einem entsprechenden, die gehäuseseitige Ableitungsöffnung umgebenden, gehäuseseitigen Dichtabschnitt bezüglich der Achse axial dichtend anliegen kann.

Erfindungsgemäß ist also das wenigstens eine Ableitungsverschlusselement so ausgestaltet, dass es die Ableitungsöffnung axial dichtend verschließen kann. Das wenigstens eine Ableitungsverschlusselement deckt in dem Schließzustand die gehäuseseitige Ableitungsöffnung ab, wobei die wenigstens eine Verschlussfläche gegen den gehäuseseitigen Dichtabschnitt in axialer Richtung wirkend abdichtet. Auf diese Weise ist es nicht erforderlich, das wenigstens eine Ableitungsverschlusselement in die Ableitungsöffnung einzubringen, wie dies bei dem Filtereinsatz aus dem Stand der Technik der Fall ist. Das wenigstens eine Ableitungsverschlusselement kann sich im Verschlusszustand vollständig außerhalb der Ableitungsöffnung und des entsprechenden Ableitungskanals befinden. So kann das Filterelement mit einer größeren Toleranz in dem Filtergehäuse angeordnet werden.

Vorteilhafterweise kann die wenigstens eine Verschlussfläche bezüglich einer gedachten Achse der Ableitungsöffnung umfangsmäßig zusammenhängend sein. Auf diese Weise kann eine entsprechend umfangsmäßig zusammenhängende Abdichtung erfolgen.

Das wenigstens eine Ableitungsverschlusselement ist an einer Stirnseite des wenigstens einen Filterelements angeordnet. Auf diese Weise kann das Filterelement bezüglich der Achse axial mit dem wenigstens einen Ableitungsverschlusselement voran in das Filtergehäuse eingesteckt werden, sodass das wenigstens eine Ableitungsverschlusselement die Ableitungsöffnung automatisch axial dichtend verschließt.

Vorteilhafterweise kann die Ableitungsöffnung in einem bezüglich der Achse axialen Bodenbereich des Filtergehäuses angeordnet sein. Auf diese Weise kann das wenigstens eine Ableitungsverschlusselement automatisch beim Einbringen des Filterelements mit der Ableitungsöffnung in Verbindung gebracht werden

Das wenigstens eine Ableitungsverschlusselement ist bezüglich der Achse exzentrisch angeordnet. Auf diese Weise kann ein zentraler Bereich des Filterelements für andere Bauteile, insbesondere einen Einlass oder einen Auslass für die Flüssigkeit, verwendet werden.

Das wenigstens eine Ableitungsverschlusselement ist in seiner bezüglich der Achse umfangsmäßigen Ausdehnung begrenzt. Das bedeutet, dass sich das wenigstens eine Ableitungsverschlusselement lediglich über einen bevorzugt kleinen Abschnitt bezüglich der Achse umfangsmäßig erstreckt. Auf diese Weise kann es platzsparend realisiert werden. Das wenigstens eine Ableitungsverschlusselement kann so als singuläres Ableitungsverschlusselement realisiert werden. Das wenigstens eine Ableitungsverschlusselement muss gerade so groß sein, dass es die Ableitungsöffnung verschließen kann. Auf diese Weise kann Material eingespart werden.

Vorteilhafterweise kann das Filterelement als sogenanntes Hohlfilterelement ausgestaltet sein. Ein Hohlfilterelement zeichnet sich dadurch aus, dass es wenigstens einen Elementinnenraum aufweist, welcher vom Filtermedium, insbesondere einem Filterbalg mit Filtermedium, umgeben wird. Das Filtermedium kann von der zu reinigenden Flüssigkeit von außen nach innen zum Elementinnenraum durchströmt werden oder umgekehrt. Der Elementinnenraum verfügt über einen Flüssigkeitsdurchlass nach außen, durch den, je nach Strömungsrichtung, die gereinigte Flüssigkeit den Elementinnenraum verlassen oder zu reinigende Flüssigkeit in diesen gelangen kann. Das Filtermedium kann den Elementinnenraum bezüglich einer Achse, insbesondere einer Elementachse, umfangsmäßig umgeben. An wenigstens einer bezüglich der Achse axialen Stirnseite kann das Filtermedium mit einem Endkörper, insbesondere einer Endscheibe, verbunden sein. Wenigstens ein Endkörper kann wenigstens eine Durchlassöffnung für den Elementinnenraum aufweisen.

Bei dem Hohlfilterelement kann es sich vorteilhafterweise um ein so genanntes Rundfilterelement mit einem runden Querschnitt, ein ovales Rundfilterelement mit einem ovalen Querschnitt, ein flach-ovales Rundfilterelement mit einem abgeflachten ovalen Querschnitt, ein konisches Rundfilterelement, bei dem sich der runde Querschnitt in axialer Richtung zu einer Hauptachse verjüngt, ein konisch-ovales Rundfilterelement, bei dem sich der ovale Querschnitt in axialer Richtung zumindest in Richtung einer Querachse verjüngt, ein konisch flach-ovales Rundfilterelement, bei dem sich der flach-ovale Querschnitt in axialer Richtung zumindest in Richtung einer Querachse verjüngt, oder ein Hohlfilterelement mit einem andersartigen, insbesondere einem eckigen, Querschnitt und/oder einem andersartigen axialen Querschnittsverlauf in Richtung einer Achse, handeln.

Das Filtermedium kann vorteilhafterweise bezüglich der Achse umfangsmäßig geschlossen oder offen sein. Das Filtermedium kann insbesondere sternförmig, bevorzugt zickzackförmig oder wellenförmig, gefaltet oder gebogen sein. Das Filtermedium kann auch ungefaltet oder ungebogen sein.

Das Filterelement kann vorteilhafterweise Teil eines Motorölfilters einer Brennkraftmaschine eines Kraftfahrzeugs sein. Der Motorölfilter kann vorteilhafterweise Teil eines Motorölkreislaufs einer Brennkraftmaschine sein. Er kann zur Reinigung von Motoröl dienen, welche der Brennkraftmaschine zugeführt wird. Die Erfindung ist jedoch nicht beschränkt auf einen Motorölfilter eines Motorölkreislaufs einer Brennkraftmaschine eines Kraftfahrzeugs. Vielmehr kann sie auch bei andersartigen Flüssigkeitssystemen, insbesondere Kraftstoffsystemen, Hydrauliksystemen, Kühlsystemen oder Fluidsystemen mit Harnstoffwasserlösung, von Kraftfahrzeugen oder anderen Maschinen verwendet werden. Der Flüssigkeitsfilter kann auch außerhalb der Kraftfahrzeugtechnik, insbesondere bei Industriemotoren, eingesetzt werden.

Die Erfindung kann bei Kraftfahrzeugen, insbesondere Personenkraftwagen, Lastkraftwagen, Bussen, landwirtschaftlichen und/oder Bau-Fahrzeugen, Bau-/Landmaschinen, Kompressoren, Industriemotoren oder sonstigen Geräten insbesondere mit Verbrennungsmotoren eingesetzt werden. Die Erfindung kann bei Land-, Wasser- und/oder Luftfahrzeugen Verwendung finden.

Bei einer vorteilhaften Ausführungsform kann das wenigstens eine Ableitungsverschlusselement wenigstens abschnittsweise glockenförmig, becherförmig, schüsselförmig, pömpelförmig oder dergleichen ausgestaltet sein, so dass eine der Endscheibe des Filterelementes abgewandte Seite des Ableitungsverschlusselementes einen größeren Umfang hat als eine der Endscheibe zugewandte Seite. Auf diese Weise kann das wenigstens eine Ableitungsverschlusselement über der Ableitungsöffnung angeordnet werden und diese verschließen. Die Umfangswand des wenigstens einen Ableitungsverschlusselements kann dabei die Ableitungsöffnung abdeckend umschließen. Die Verschlussfläche kann an dem freien Rand der Umfangswand realisiert sein.

Erfindungsgemäß ist das wenigstens eine Ableitungsverschlusselement elastisch. Auf diese Weise kann eine axiale Lagetoleranz, insbesondere des Filterelements in dem Filtergehäuse, ausgeglichen werden. Ferner können insbesondere betriebsbedingte Schwingungen besser kompensiert werden. Ein glocken- oder becherförmig oder dergleichen geformtes Ableitungsanschlusselement kann beim Einbau des Filterelements in das Filtergehäuse über der Ableitungsöffnung angeordnet sein und durch entsprechende bezüglich der Achse axiale Verpressung mit seinen Rändern gegen den gehäuseseitigen Dichtabschnitt eine vergrößerte Dichtwirkung entfalten.

Erfindungsgemäß ist das wenigstens eine Ableitungsverschlusselement mittels einer Halteeinrichtung an einem bezüglich der Achse stirnseitigen Endkörper des Filterelements befestigt. Auf diese Weise kann das wenigstens eine Ableitungsverschlusselement gemeinsam mit dem Filterelement ein- und ausgebaut werden. Ferner können die Halteeinrichtung bezüglich der Haltefunktion und das wenigstens eine Ableitungsverschlusselement bezüglich seiner Schließ- und Dichtfunktion jeweils optimiert sein.

Bei dem stirnseitigen Endkörper kann es sich vorteilhafterweise um eine sogenannte Endscheibe handeln. Mit dem stirnseitigen Endkörper kann eine Stirnseite des Filtermediums verschlossen sein.

Vorteilhafterweise kann das wenigstens eine Ableitungsverschlusselement mittels der Halteeinrichtung trennbar oder nicht trennbar mit dem stirnseitigen Endkörper verbunden sein. Das Filterelement kann mittels einer trennbaren Halteeinrichtung mit dem wenigstens einen Ableitungsverschlusselement nachgerüstet werden.

Alternativ kann die Halteeinrichtung nicht zerstörungsfrei trennbar mit dem Endkörper verbunden sein. Auf diese Weise kann eine entsprechend stabilere mechanische Verbindung realisiert sein.

Vorteilhafterweise können das wenigstens eine Ableitungsverschlusselement und die Halteeinrichtung aus unterschiedlichen Materialien realisiert sein.

Bei einer weiteren vorteilhaften Ausführungsform kann die Halteeinrichtung mittels einer Schnellverbindung an dem Endkörper befestigt sein. Auf diese Weise kann die Verbindung zwischen der Halteeinrichtung und dem Endkörper einfach und schnell hergestellt werden.

Vorteilhafterweise kann die Halteeinrichtung mittels einer Klemmverbindung, einer Rastverbindung, einer Klipsverbindung, einer Dreh- und/oder Steckverbindung, insbesondere einer Schraubverbindung und/oder einer bajonettartigen Verbindung, oder dergleichen oder einer Kombination aus mehreren Verbindungsarten, an dem Endkörper befestigt sein.

Bei einer weiteren vorteilhaften Ausführungsform kann wenigstens ein Ableitungsverschlusselement trennbar oder nicht zerstörungsfrei trennbar mit der Halteeinrichtung verbunden sein.

Das Ableitungsverschlusselement ist in die Halteeinrichtung eingeknöpft. Durch Einknöpfen kann eine einfache, insbesondere trennbare, Verbindung realisiert werden. Es sind bei einer Befestigung des Ableitungsverschlusselementes in der Halteeinrichtung durch Einknüpfen keine weiteren Bauteile erforderlich. Das Ableitungsverschlusselement, aus einem elastischen Werkstoff, ist in eine Ausnehmung in der Halteeinrichtung eingebracht und durch die Ausdehnung des elastischen Materials nach dem Einbringen in die Ausnehmung reib- oder formschlüssig in der Halteeinrichtung gehalten. Die Ausnehmung kann eine einseitig geschlossene Öffnung, beispielsweise in Form eines Sackloches, oder eine die Halteeinrichtung durchragende Öffnung, beispielsweise in Form eines Durchgangsloches, sein. Das Ableitungsverschlusselement kann bei einer durchragenden Öffnung von der dem Ableitungsverschluss abgewandten Seite in die Ausnehmung gezogen sein oder von der dem Ableitungsverschluss zugewandten Seite in die Ausnehmung hineingedrückt sein.

Erfindungsgemäß weist das Filterelement wenigstens einen Teil wenigstens einer Positioniereinrichtung auf, mit der eine Drehorientierung des Filterelements bezüglich der Achse in dem Filtergehäuse eindeutig vorgegeben ist. Mithilfe der wenigstens einen Positioniereinrichtung kann das Filterelement beim Einbau bezüglich der Drehorientierung so ausgerichtet werden, dass das wenigstens eine Ableitungsverschlusselement automatisch korrekt an der Ableitungsöffnung positioniert wird. Auf diese Weise kann ein Einbau des Filterelements und das automatische Verschließen der Ableitungsöffnung mithilfe des wenigstens einen Ableitungsverschlusselements einfacher und zuverlässiger realisiert werden.

Die wenigstens eine Positioniereinrichtung kann so ausgestaltet sein, dass bei einer falschen Montage des Filterelements oder der Verwendung eines falschen Filterelements ein Verschluss des Filtergehäuses und/oder ein Betrieb des Filters verhindert werden kann. Auf diese Weise kann die Funktionssicherheit des Filters verbessert werden.

Vorteilhafterweise kann die wenigstens eine Positioniereinrichtung räumlich getrennt von der Ableitungsöffnung und/oder dem wenigstens einen Ableitungsverschlusselement realisiert sein. Auf diese Weise können die entsprechenden Bauteile flexibler, insbesondere an unterschiedlichen Stellen, realisiert werden.

Erfindungsgemäß weist die wenigstens eine Positioniereinrichtung wenigstens ein elementseitiges Positionierelement und wenigstens ein korrespondierendes gehäuseseitiges Positionierelement auf. Das wenigstens eine elementseitige Positionierelement und das wenigstens eine gehäuseseitige Positionierelement können auf diese Weise zusammenwirken, um die entsprechende Drehorientierung des Filterelements in dem Filtergehäuse zu gewährleisten.

Bei einer weiteren vorteilhaften Ausführungsform kann wenigstens ein Positionierelement wenigstens eine Vertiefung aufweisen und wenigstens ein entsprechendes Positionierelement kann eine Erhöhung aufweisen, welche in die Vertiefung eingreifen kann.

Vorteilhafterweise kann die wenigstens eine Positioniereinrichtung so ausgestaltet sein, dass nur in der korrekten Drehorientierung ein korrekter Einbau des Filterelements in das Filtergehäuse möglich ist. Andernfalls kann der Filter so ausgestaltet sein, dass insbesondere ein Verschließen des Filterelements verhindert werden kann. So können Einbaufehler frühzeitig erkannt werden.

Vorteilhafterweise kann wenigstens ein Positionierelement einen Stift oder einen Vorsprung aufweisen. Derartige Erhöhungen können mit entsprechenden Vertiefungen, insbesondere Löchern oder Aussparungen, im jeweils anderen Bauteil zusammenwirken.

Vorteilhafterweise kann wenigstens ein Positionierelement bezüglich der Achse axial stirnseitig, radial außen und/oder radial innen an dem wenigstens einen Filterelement angeordnet sein. Bei einer axial stirnseitigen Anordnung kann eine radiale Ausdehnung des Filterelements entsprechend verringert werden. Entsprechend kann bei einem radial außen oder radial innen angeordneten Positionierelement eine axiale Ausdehnung des Filterelements entsprechend verringert werden. Ein Positionierelement kann sich auch von radial innen über die Stirnseite nach radial außen erstrecken. Es kann sich auch nur radial innen und an der Stirnseite oder radial außen und an der Stirnseite befinden.

Vorteilhafterweise befindet sich die wenigstens eine Positioniereinrichtung auf der dem Ableitungskanal bzw. dem Ableitungsverschlusselement radial gegenüberliegenden Seite bezogen auf die Gehäuseachse des Filtergehäuses bzw. der Einbau-/Ausbauachse des Filterelements in das beziehungsweise aus dem Filtergehäuse und einer Elementachse des Filterelements.

In einer alternativen Ausführung ist die Positioniereinrichtung abweichend von einer Anordnung radial gegenüberliegend des Ableitungskanals bzw. des Ableitungsverschlusselements in einem Winkel um die Gehäuseachse des Filtergehäuses bzw. der Einbau-/Ausbauachse des Filterelements in das beziehungsweise aus dem Filtergehäuse und einer Elementachse des Filterelements angeordnet.

Alternativ oder zusätzlich kann wenigstens eine Positioniereinrichtung durch die äußere Form des Filterelements und eine entsprechende innere Form eines Aufnahmeraums des Filtergehäuses für das Filterelement vorgegeben sein. So kann insbesondere ein bezüglich der Achse unsymmetrisches, insbesondere unrundes Filterelement in einem entsprechend geformten Filtergehäuse angeordnet werden. Auf diese Weise kann auf separate Positionierelemente verzichtet werden.

Die Aufgabe wird ferner bei dem Filter erfindungsgemäß dadurch gelöst, dass das wenigstens eine Ableitungsverschlusselement an seiner freien bezüglich der Achse axialen Stirnseite wenigstens eine wenigstens teilweise bezüglich der Achse axial gerichtete Verschlussfläche aufweist, die an einem entsprechenden, die gehäuseseitige Ableitungsöffnung umgebenden, gehäuseseitigen Dichtabschnitt bezüglich der Achse axial dichtend anliegt.

Erfindungsgemäß weist das Filtergehäuse wenigstens ein Teil wenigstens einer Positioniereinrichtung auf, mit der eine Drehorientierung des wenigstens einen Filterelements bezüglich der Achse in dem Filtergehäuse eindeutig vorgegeben ist. Auf diese Weise kann das Filterelement beim Einbau in das Filtergehäuse automatisch so orientiert werden, dass das wenigstens eine Ableitungsverschlusselement automatisch über der Ableitungsöffnung positioniert wird.

Im Übrigen gelten die im Zusammenhang mit dem erfindungsgemäßen Filterelement und dem erfindungsgemäßen Filter und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: einen Längsschnitt eines Ausschnitts eines Filters für Flüssigkeit gemäß einem ersten Ausführungsbeispiel, mit einem Filtergehäuse, in dem ein Filterelement austauschbar angeordnet ist;
- Figur 2: einen Querschnitt des Filters aus der Figur 1 entlang der dortigen Schnittlinie II-II;
- Figur 3: einen Längsschnitt eines Ausschnitts eines Filters für Flüssigkeit gemäß einem zweiten Ausführungsbeispiel;
- Figur 4: einen Querschnitt des Filters aus der Figur 3 entlang der dortigen Schnittlinie IV-IV;
- Figur 5: einen Längsschnitt eines Ausschnitts eines Filters für Flüssigkeit gemäß einem dritten Ausführungsbeispiel.

In den Figuren sind gleiche Bauteile mit gleichen Bezugszeichen versehen.

### Ausführungsform(en) der Erfindung

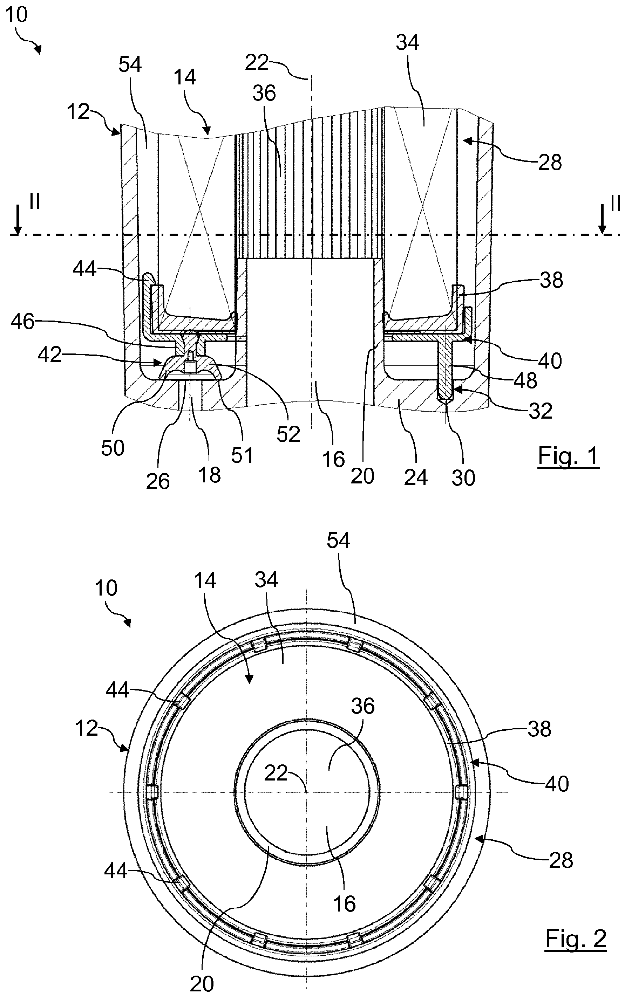

In den Figuren 1 und 2 ist ein Filter 10 zur Reinigung von Flüssigkeit, beispielsweise Motoröl, gemäß einem ersten Ausführungsbeispiel gezeigt. Der Filter 10 kann beispielsweise in einem Motorölkreislauf einer Brennkraftmaschine eines Kraftfahrzeugs zur Reinigung des Motoröls angeordnet sein.

Der Filter 10 umfasst ein öffenbares Filtergehäuse 12, in dem ein Filterelement 14 austauschbar angeordnet ist.

Das Filtergehäuse 12 umfasst einen in den Figuren nicht gezeigten Einlass für zu reinigende Flüssigkeit, einen Auslass 16 für gereinigte Flüssigkeit, einen Ableitungskanal 18 zur Entleerung des Filters 10 beim Ausbau des Filterelements 14 und eine in den Figuren nicht gezeigte Einbauöffnung zum Einbau und Ausbau des Filterelements 14 in einen Aufnahmeraum 28 für das Filterelement 14 im Inneren des Filtergehäuses 12. Die Einbauöffnung ist mit einem nicht gezeigten Gehäusedeckel verschließbar, welcher beispielsweise zum Austausch des Filterelements 14 geöffnet werden kann.

Der Auslass 16 ist in einem Zylinderabschnitt 20 realisiert. Der Zylinderabschnitt 20 erstreckt sich von einem Bodenabschnitt 24 des Filtergehäuses 12 koaxial zu einer gedachten Achse 22 in den Aufnahmeraum 28. Der Zylinderabschnitt 20 ist einstückig mit dem Bodenabschnitt 24 verbunden. Der Bodenabschnitt 24 befindet sich auf der der Einbauöffnung und dem Gehäusedeckel axial gegenüberliegenden Seite.

Die Achse 22 fällt in dem Ausführungsbeispiel zusammen mit einer Gehäuseachse des Filtergehäuses 12, einer Einbau-/Ausbauachse des Filterelements 14 in das beziehungsweise aus dem Filtergehäuse 12 und einer Elementachse des Filterelements 14. Der besseren Übersichtlichkeit wegen sind im Folgenden die Elementachse, die Gehäuseachse und die Einbau-/Ausbauachse mit demselben Bezugszeichen 22 versehen und werden kurz als Achse 22 bezeichnet. Es versteht sich, dass bei ausgebautem Filterelement 14, je nach Kontext, die Gehäuseachse, die Elementachse und/oder die Einbau-/Ausbauachse gemeint ist. Wenn im Folgenden von "radial", "koaxial", "axial", "tangential", "umfangsmäßig", "konzentrisch", "exzentrisch" oder dergleichen die Rede ist, so bezieht sich dies, sofern nicht anders erwähnt, auf die Achse 22.

Der Ableitungskanal 18 ist bezüglich der Achse 22 exzentrisch in dem Bodenabschnitt 24 angeordnet. Beispielhaft verläuft eine gedachte Achse des Ableitungskanals 18 parallel zur Achse 22. Der Ableitungskanal 18 öffnet sich mit einer Ableitungsöffnung 26 zu dem Aufnahmeraum 28. Alternativ kann die Achse des Ableitungskanals 18 auch schräg zur Achse 22 verlaufen.

Ferner ist in dem Bodenabschnitt 24 ein gehäuseseitiges Positionierelement 30 in Form eines Sacklochs angeordnet. Das gehäuseseitige Positionierelement 30 ist Teil einer insgesamt mit 32 bezeichneten Positioniereinrichtung, mit der eine Drehorientierung des Filterelements 14 bezüglich der Achse 22 in dem Aufnahmeraum 28 des Filtergehäuses 12 eindeutig vorgegeben wird. Das gehäuseseitige Positionierelement 30 ist räumlich getrennt von dem Ableitungskanal 18 und der Ableitungsöffnung 26 realisiert. Beispielhaft befindet sich das gehäuseseitige Positionierelement 30 auf der dem Ableitungskanal 18 radial gegenüberliegenden Seite der Achse 22. Eine gedachte Achse des Sacklochs des Positionierelements 30 verläuft mit seiner Achse parallel zur Achse 22.

Das Filterelement 14 ist beispielhaft als sogenanntes Rundfilterelement ausgestaltet. Das Filterelement 14 umfasst ein Filtermedium 34, welches beispielhaft zickzackförmig umfangsmäßig geschlossen gefaltet ist. Das Filtermedium 34 umgibt einen Elementinnenraum 36 des Filterelements 14 umfangsmäßig zusammenhängend. An seinen axialen Stirnseiten ist das Filtermedium 34 jeweils mit einer sogenannten Endscheibe verbunden, von denen in der Figur 1 lediglich die dem Bodenabschnitt 24 zugewandte, auslassseitige Endscheibe 38 gezeigt ist. Die auslassseitige Endscheibe 38 weist eine zentrale koaxiale Öffnung auf, durch welche der gehäuseseitige Zylinderabschnitt 20 hindurchführt.

An der auslassseitigen Endscheibe 38 ist mit einer ringförmigen Halteeinrichtung 40 ein Ableitungsverschlusselement 42 befestigt. Das Ableitungsverschlusselement 42 dient dem Verschließen der Ableitungsöffnung 26 bei korrekt eingebautem Filterelement 14.

Die Halteeinrichtung 40 ist beispielhaft mittels einer Klipsverbindung mit der auslassseitigen Endscheibe 38 verbunden. Hierzu weist die Halteeinrichtung 40 an der radial äußeren Umfangsseite umfangsmäßig verteilt eine Mehrzahl von Rasthaken 44 auf. Die Rasthaken 44 umgreifen jeweils eine radial äußere koaxiale zylindrische Umfangswand der Endscheibe 38 von außen und rasten auf der dem Bodenabschnitt 24 axial abgewandten Seite hinter der Umfangswand der Endscheibe 38 ein.

Auf ihrer der auslassseitigen Endscheibe 38 axial abgewandten Seite verfügt die Halteeinrichtung 40 über eine Aufnahme 46, in die das Ableitungsverschlusselement 42 eingeknöpft ist.

Auf der der Achse 22 radial gegenüberliegenden Seite ist an der der auslassseitigen Endscheibe 38 axial abgewandten Seite der Halteeinrichtung 40 ein elementseitiges Positionierelement 48 in Form eines Stiftes angeordnet. Das elementseitige Positionierelement 48 ist somit räumlich getrennt von dem Ableitungsverschlusselement 42 realisiert. Eine gedachte Achse des elementseitigen Positionierelements 48 erstreckt sich parallel zur Achse 22. Das elementseitige Positionierelement 48 ist bezüglich des Ableitungsverschlusselements 42 so angeordnet wie das gehäuseseitige Positionierelement 30 bezüglich der Ableitungsöffnung 26. In der korrekten Drehorientierung des Filterelements 14, in der das elementseitige Positionierelement 48 in das gehäuseseitige Positionierelement 30 eingreift, verschließt das Ableitungsverschlusselement 42 die Ableitungsöffnung 26. In anderen, nicht korrekten Drehorientierungen verhindert das elementseitige Positionierelement 48, dass das Filterelement 14 vollständig in das Filtergehäuse 12 eingebaut werden kann, sodass der Gehäusedeckel nicht verschlossen werden kann.

Das Ableitungsverschlusselement 42 weist einen Verschlussabschnitt 50 mit der Form ähnlich einer Glocke auf. Der freie Rand des Verschlussabschnitts 50 ist dem Filterelement 14 abgewandt und der Ableitungsöffnung 26 zugewandt. Der freie Rand des Verschlussabschnitts 50 bildet eine axial gerichtete Verschlussfläche 51. Die Verschlussfläche 51 ist bezüglich einer gedachten Achse des Ableitungsverschlusselements 42 umfangsmäßig zusammenhängend. Der Verschlussabschnitt 50 ist aus einem elastischen Material, sodass er sich durch entsprechenden axialen Druck des Filterelements 14 in Richtung des Bodenabschnitts 24 elastisch verformen kann und somit eine Dichtwirkung vergrößert wird. Die Verschlussfläche 51 liegt bei korrekt eingebautem Filterelement 14 axial dichtend an einem entsprechenden Dichtabschnitt 52 des Bodenabschnitts 24 an. Der Dichtabschnitt 52 umgibt die Ableitungsöffnung 26 bezüglich deren Achse umfangsmäßig zusammenhängend.

Beim Betrieb des Filters 10 wird zu reinigende Flüssigkeit über den Einlass in das Filtergehäuse 12 eingeleitet und gelangt in einen das Filterelement 14 radial umgebenden Einlassringraum 54. Die zu reinigende Flüssigkeit strömt von radial außen nach radial innen durch das Filtermedium 34 in den Elementinnenraum 36. Mit dem Filtermedium 34 wird die Flüssigkeit gereinigt. Die gereinigte Flüssigkeit gelangt aus dem Elementinnenraum 36 in den Auslass 16 und verlässt so das Filtergehäuse 12.

Zum Austausch des Filterelements 14 wird der in den Figuren nicht gezeigte Gehäusedeckel geöffnet. Das Filterelement 14 wird in axialer Richtung aus dem Aufnahmeraum 28 gezogen. Dabei gibt das Ableitungsverschlusselement 42 die Ableitungsöffnung 26 frei, sodass in dem Filtergehäuse 12 enthaltene Flüssigkeit durch den Ableitungskanal 18 herausgelangen kann und so das Filtergehäuse 12 entleert wird.

Zum Einbau eines neuen Filterelements 14 wird dieses mit der Halteeinrichtung 40 voran in axialer Richtung in den Aufnahmeraum 28 gesteckt. Gegebenenfalls muss das Filterelement 14 um die Achse 22 relativ zum Filtergehäuse 12 so gedreht werden, dass das elementseitige Positionierelement 48 in das gehäuseseitige Positionierelement 30 gleiten kann. In dieser Drehorientierung ist das Ableitungsverschlusselement 42 über der Ableitungsöffnung 26 positioniert. Durch entsprechende axiale Kraft auf das Filterelement 14, beispielsweise beim Verschließen des Gehäusedeckels, wird die Verschlussfläche 51 des Ableitungsverschlusselements 42 in axialer Richtung dichtend gegen den gehäuseseitigen Dichtabschnitt 42 gedrückt und so die Ableitungsöffnung 26 dicht verschlossen. Der Filter 10 ist nach vollständigem Schließen des Gehäusedeckels betriebsbereit.

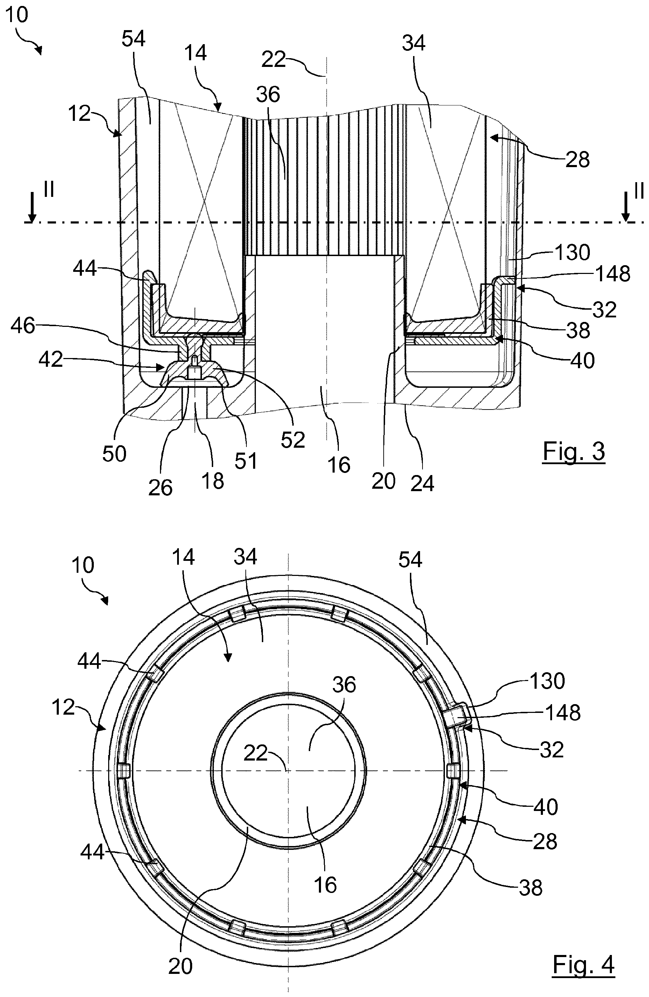

In den Figuren 3 und 4 ist ein Filter 10 gemäß einem zweiten Ausführungsbeispiel gezeigt. Diejenigen Elemente, die zu denen des ersten Ausführungsbeispiels aus den Figuren 1 und 2 ähnlich sind, sind mit denselben Bezugszeichen versehen. Im Unterschied zu dem Filter 10 gemäß dem ersten Ausführungsbeispiel aus den Figuren 1 und 2 ist beim zweiten Ausführungsbeispiel ein gehäuseseitiges Positionierelement 130, wie beispielsweise in der Figur 4 gezeigt, als radiale Vertiefung in der radial inneren Umfangsseite einer Umfangswand des Filtergehäuses 12 realisiert. Ein entsprechendes elementseitiges Positionierelement 148 ist als entsprechender Vorsprung an der radial äußeren Umfangsseite der Halteeinrichtung 40 realisiert, der sich nach radial außen erstreckt. Wie beim ersten Ausführungsbeispiel befinden sich die Positionierelemente 130 und 148 auf der bezüglich der Achse 22 radial gegenüberliegenden Seite des Ableitungsverschlusselements 42 und der Ableitungsöffnung 26 räumlich getrennt von diesen.

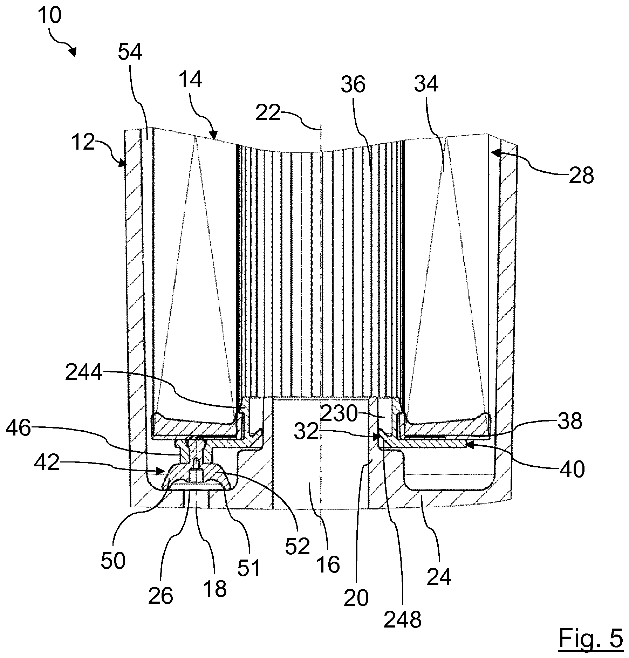

In der Figur 5 ist ein Filter 10 gemäß einem dritten Ausführungsbeispiel gezeigt. Diejenigen Elemente, die zu denen des zweiten Ausführungsbeispiels aus den Figuren 3 und 4 ähnlich sind, sind mit denselben Bezugszeichen versehen. Im Unterschied zu dem Filter 10 gemäß dem zweiten Ausführungsbeispiel aus den Figuren 3 und 4 sind beim dritten Ausführungsbeispiel zwei gehäuseseitige Positionierelemente 230 in Form von radialen Vertiefungen in der radial äußeren Umfangswand des Zylinderabschnitts 20 angeordnet. Entsprechende elementseitige Positionierelemente 248 sind als entsprechende radiale Vorsprünge an der radial inneren Umfangsseite der Halteeinrichtung 40 realisiert.

Außerdem sind statt der Rasthaken 44 an der radial äußeren Umfangsseite wie bei dem ersten und dem zweiten Ausführungsbeispiel entsprechende Rasthaken 244 an der radial inneren Umfangsseite der Halteeinrichtung 40 angeordnet. Diese Rasthaken 244 verrasten hinter einer entsprechenden radial inneren zylindrischen koaxialen Umfangswand der Endscheibe 38.

## Patentansprüche

1. Filterelement (14) eines Filters (10) für Flüssigkeit, welches in einem Filtergehäuse (12) des Filters (10) austauschbar angeordnet ist oder werden kann, mit
- wenigstens einem Filtermedium (34), welches eine gedachte Achse (22) umfangsmäßig umgibt,
- wenigstens einem Ableitungsverschlusselement (42), welches an einer bezüglich der Achse (22) axialen Stirnseite des Filterelements (14) exzentrisch angeordnet ist und mit dem eine Ableitungsöffnung (26) eines Ableitungskanals (18) des Filtergehäuses (12), welcher zur Entleerung des Filters (10) beim Ausbau des Filterelements (14) dient, in eingebautem Zustand des Filterelements (14) verschlossen ist,
wobei das wenigstens eine Ableitungsverschlusselement (42) in seiner bezüglich der Achse (22) umfangsmäßigen Ausdehnung begrenzt ist,
**dadurch gekennzeichnet, dass**
das wenigstens eine Ableitungsverschlusselement (42) an seiner freien bezüglich der Achse (22) axialen Stirnseite wenigstens eine bezüglich der Achse (22) axial gerichtete Verschlussfläche (51) aufweist, die an einem entsprechenden, die gehäuseseitige Ableitungsöffnung (26) umgebenden, gehäuseseitigen Dichtabschnitt (52) bezüglich der Achse (22) axial dichtend anliegen kann, wobei das wenigstens eine Ableitungsverschlusselement (42) aus einem elastischen Werkstoff ist und mittels einer Halteeinrichtung (40) an einem bezüglich der Achse (22) stirnseitigen Endkörper (38) des Filterelements (14) befestigt ist, wobei das Ableitungsverschlusselement (42) in eine Ausnehmung in der Halteeinrichtung (40) eingebracht und dort reib- oder formschlüssig gehalten ist, und wobei das Filterelement (14) wenigstens einen Teil wenigstens einer Positioniereinrichtung (32) aufweist, mit der eine Drehorientierung des Filterelements (14) bezüglich der Achse (22) in dem Filtergehäuse (12) eindeutig vorgebbar ist, wobei die wenigstens eine Positioniereinrichtung (32) wenigstens ein elementseitiges Positionierelement (48; 148; 248) aufweist, das mit wenigstens einem korrespondierenden gehäuseseitigen Positionierelement (30; 130; 230) zusammenwirken kann.

2. Filterelement nach Anspruch 1, **dadurch gekennzeichnet, dass** das wenigstens eine Ableitungsverschlusselement (42) wenigstens abschnittsweise glockenförmig oder becherförmig ausgestaltet ist.

3. Filterelement nach Anspruch 1, **dadurch gekennzeichnet, dass** die Halteeinrichtung (40) mittels einer Schnellverbindung (44) an dem Endkörper (38) befestigt ist.

4. Filterelement nach einem der vorherigen Ansprüche, **dadurch gekennzeichnet, dass** wenigstens ein Ableitungsverschlusselement (42) trennbar oder nicht zerstörungsfrei trennbar mit der Halteeinrichtung (40) verbunden ist.

5. Filterelement nach einem der vorherigen Ansprüche, **dadurch gekennzeichnet, dass** das wenigstens eine elementseitseitige Positionierelement (48; 148; 248) eine Erhöhung aufweist, welche in eine gehäuseseitige Vertiefung eingreifen kann.

6. Filter (10) für Flüssigkeit, mit einem Filtergehäuse (12), in dem wenigstens ein Filterelement (14) nach einem der Ansprüche 1 bis 5 austauschbar angeordnet ist, wobei das Filtergehäuse (12) aufweist
- wenigstens einen Einlass für zu reinigende Flüssigkeit,
- wenigstens einen Auslass (16) für gereinigte Flüssigkeit,
- wenigstens einen Ableitungskanal (18) für Flüssigkeit zur Entleerung des Filters (10) beim Ausbau des wenigstens einen Filterelements (14),
- wenigstens eine verschließbare Einbauöffnung zum Einbau und Ausbau des wenigstens einen Filterelements (14),
wobei das Filtergehäuse (12) wenigstens einen Teil wenigstens einer Positioniereinrichtung (32) aufweist, mit der eine Drehorientierung des wenigstens einen Filterelements (14) bezüglich der Achse (22) in dem Filtergehäuse (12) eindeutig vorgegeben ist, wobei die wenigstens eine Positioniereinrichtung (32) wenigstens ein elementseitiges Positionierelement (48; 148; 248) aufweist, das mit wenigstens einem korrespondierenden gehäuseseitigen Positionierelement (30; 130; 230) zusammenwirken kann.

7. Filter nach Anspruch 6, **dadurch gekennzeichnet, dass** wenigstens ein Positionierelement (30; 130; 230) wenigstens eine Vertiefung aufweist und wenigstens ein korrespondierendes Positionierelement (48; 148; 248) eine Erhöhung aufweist, welche in die Vertiefung eingreifen kann.

## Claims

1. A filter element (14) of a filter (10) for a liquid, which is or can be replaceably disposed in a filter housing (10) of the filter (14), with
- at least one filter medium (34) surrounding an imaginary axis (22) circumferentially,
- at least one discharge closure element (42) disposed eccentrically on a front face of the filter element (14) which is axial with respect to the axis (22) and with which a discharge opening (26) of a discharge channel (18) of the filter housing (12), which serves to empty the filter (10) when the filter element (14) is removed, is closed when the filter element (14) is installed,
wherein the at least one discharge closure element (42) is limited in its circumferential extension relative to the axis (22),
**characterized in that**
the at least one discharge closure element (42) features, on its free axial front face with respect to the axis (22), at least one closure surface (51) directed axially with respect to the axis (22), which can bear axially in a sealing manner with respect to the axis (22) against a corresponding housing-side sealing section (52) surrounding the housing-side discharge opening (26), wherein the at least one discharge closure element (42) is made of an elastic material and fixed using a holding means (40) to an end body (38) of the filter element (14) on the front face with respect to the axis (22), wherein the discharge closure element (42) is inserted into a recess in the holding means (40) and is held there in a friction-locking or form-fitting manner, and wherein the filter element (14) at least one part of at least one positioning device (32) with which a rotational orientation of the filter element (14) relative to the axis (22) in the filter housing (12) can be clearly predetermined, wherein the at least one positioning device (32) features at least one element-side positioning element (48; 148; 248) which can interact with at least one corresponding housing-side positioning element (30; 130; 230).

2. The filter element according to claim 1, **characterized in that** the at least one discharge closure element (42) is, at least in sections, designed to be bell-shaped or cup-shaped.

3. The filter element according to claim 1, **characterized in that** the holding means (40) is fastened to the end body (38) by means of a quick-release connection (44).

4. The filter element according to one of the above claims, **characterized in that** at least one discharge closure element (42) is connected to the holding means (40) in a separable or non-destructively separable manner.

5. The filter element according to one of the above claims, **characterized in that** the at least one element-side positioning element (48; 148; 248) features an elevation which can engage in a recess on the housing side.

6. A filter (10) for liquids, with a filter housing (12) in which at least one filter element (14) according to one of claims 1 to 5 is disposed replaceably, wherein the filter housing (12) features
- at least one inlet for liquid to be purified,
- at least one outlet (16) for purified liquid,
- at least one discharge channel (18) for liquid for emptying the filter (10) when the at least one filter element (14) is removed,
- at least one closable mounting opening for mounting and dismounting the at least one filter element (14),
wherein the filter housing (12) features at least one part of at least one positioning device (32) with which a rotational orientation of the at least one filter element (14) relative to the axis (22) in the filter housing (12) is clearly predefined, wherein the at least one positioning device (32) features at least one element-side positioning element (48; 148; 248) which can interact with at least one corresponding housing-side positioning element (30; 130; 230).

7. The filter according to claim 6, **characterized in that** at least one positioning element (30; 130; 230) features at least one recess and at least one corresponding positioning element (48; 148; 248) features an elevation engageable in the recess.

## Revendications

1. Élément filtrant (14) d'un filtre (10) pour liquide, qui est ou peut être disposé de manière échangeable dans un boîtier de filtre (10) du filtre (14), avec
- au moins un milieu filtrant (34) entourant un axe imaginaire (22) en sens circonférentiel,
- au moins un élément de fermeture d'évacuation (42) disposé de manière excentrique sur une face frontale de l'élément filtrant (14) axiale par rapport à l'axe (22) et avec lequel une ouverture d'évacuation (26) d'un conduit d'évacuation (18) du boîtier de filtre (12) servant à vider le filtre (10) lors du démontage de l'élément filtrant (14), lorsque l'élément filtrant (14) est monté, l'élément de fermeture d'évacuation (42), au moins au nombre d'un, étant limité dans son extension en sens circonférentiel par rapport à l'axe (22),
**caractérisé en ce que**
l'élément de fermeture d'évacuation (42), au moins au nombre d'un, présente, sur sa face frontale libre par rapport à l'axe (22) dans le sens axial, au moins une surface de fermeture (51) orientée dans le sens axial par rapport à l'axe (22), qui peut s'appliquer de manière étanche axialement par rapport à l'axe (22) sur une section d'étanchéité correspondante (52) côté boîtier et entourant l'ouverture d'évacuation (26) côté boîtier, l'élément de fermeture d'évacuation (42), au moins au nombre d'un, étant réalisé en un matériau élastique et fixé au moyen d'un dispositif de maintien (40) sur un corps d'extrémité (38) frontal de l'élément de filtre (14) par rapport à l'axe (22), l'élément de fermeture d'évacuation (42) étant introduit dans un évidement dans le dispositif de maintien (40) et y étant maintenu par friction ou par engagement positif, et l'élément filtrant (14) présentant au moins une partie d'au moins un dispositif de positionnement (32) permettant de prédéfinir de manière univoque une orientation en rotation de l'élément filtrant (14) par rapport à l'axe (22) dans le boîtier de filtre (12), le dispositif de positionnement (32), au moins au nombre d'un, comportant au moins un élément de positionnement (48; 148; 248) côté élément, qui peut coopérer avec au moins un élément de positionnement correspondant (30; 130; 230) côté boîtier.

2. Élément filtrant selon la revendication 1, **caractérisé en ce que** l'élément de fermeture d'évacuation (42), au moins au nombre d'un, est conçu au moins par sections en forme de cloche ou en forme de coupe.

3. Élément filtrant selon la revendication 1, **caractérisé en ce que** le dispositif de maintien (40) est fixé au corps d'extrémité (38) au moyen d'un raccord rapide (44).

4. Élément filtrant selon l'une quelconque des revendications précédentes, **caractérisé en ce qu'au** moins un élément de fermeture d'évacuation (42) est relié de manière séparable ou non séparable sans destruction au dispositif de retenue (40).

5. Élément filtrant selon l'une quelconque des revendications précédentes, **caractérisé en ce que** l'élément de positionnement (48; 148; 248), au moins au nombre d'un, côté élément, présente une saillie qui peut venir en prise avec un creux, côté boîtier.

6. Filtre (10) pour liquide, avec un boîtier de filtre (12) dans lequel au moins un élément filtrant (14) selon l'une quelconque des revendications 1 à 5 est disposé de manière échangeable, le boîtier de filtre (12) présentant
- au moins une entrée pour le liquide à purifier,
- au moins une sortie (16) pour le liquide purifié,
- au moins un conduit d'évacuation (18) pour le liquide destiné à vider le filtre (10) lors du démontage de l'élément filtrant (14), au moins au nombre d'un,
- au moins une ouverture de montage pouvant être fermée pour le montage et le démontage de l'élément filtrant (14), au moins au nombre d'un,
le boîtier de filtre (12) présentant au moins une partie d'un dispositif de positionnement (32), au moins au nombre d'un, qui permet de prédéfinir de manière univoque l'orientation en rotation de l'élément filtrant (14), au moins au nombre d'un, par rapport à l'axe (22) dans le boîtier de filtre (12), le dispositif de positionnement (32), au moins au nombre d'un, comportant au moins un élément de positionnement (48; 148; 248) côté élément, qui peut coopérer avec au moins un élément de positionnement correspondant (30; 130; 230) côté boîtier.

7. Filtre selon la revendication 6, **caractérisé en ce qu'au** moins un élément de positionnement (30; 130; 230) présente au moins un creux et au moins un élément de positionnement correspondant (48; 148; 248) présente une saillie qui peut s'engager dans le creux.
